(19) **Europäisches Patentamt European Patent Office Office européen des brevets**

(11) **EP 4 703 698 A1**

(12) # EUROPEAN PATENT APPLICATION

(43) Date of publication:
**04.03.2026 Bulletin 2026/10**

(21) Application number: **24197451.8**

(22) Date of filing: **30.08.2024**

(51) International Patent Classification (IPC):
**G01M 1/16** *(2006.01)*    **G01M 1/22** *(2006.01)*
**G01M 1/28** *(2006.01)*    **G01M 1/32** *(2006.01)*
**G01M 1/34** *(2006.01)*    **G01M 1/36** *(2006.01)*
**H02K 15/165** *(2025.01)*

(52) Cooperative Patent Classification (CPC):
**G01M 1/22; G01M 1/28; G01M 1/32; G01M 1/34;
G01M 1/36; H02K 15/165**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **ABB SCHWEIZ AG
5400 Baden (CH)**

(72) Inventors:
• **SAARINEN, Kari
724 67 Västerås (SE)**
• **KRYNISKI, Krystof
181 39 Lidingö (SE)**

(74) Representative: **Kransell & Wennborg KB
P.O. Box 27834
115 93 Stockholm (SE)**

(54) **METHOD FOR DETERMINING A BALANCING ACTION TO BALANCE AN ELECTRIC MACHINE**

(57)     A method is disclosed for determining a balancing action for electric machine (100), the electric machine comprising a stator (101), a rotor (102), a shaft (103) fixed to the rotor, and at least one bearing (104, 105) supporting the shaft, the method comprising:
- collecting measurement data from a displacement sensor (no) during rotation of the electric machine (100), the data relating to displacements of a shaft of the electric machine in a detection plane (P) normal to a longitudinal axis (Z) of the shaft,
- estimating an unbalance force by predicting at least one displacement of the shaft in the at least one detection plane as a function of at least one potential unbalance force using a dynamic model of the electric machine, and comparing the measured displacements to the predicted at least one displacement,
- determining the balancing action based on the estimated unbalance force.

Fig. 2

EP 4 703 698 A1

## Description

### TECHNICAL FIELD

The technology disclosed herein relates generally to balancing of electrical machines, and in particular to means and methods for determining a balancing action to balance an electrical machine. It further relates to an electric machine assembly.

### BACKGROUND

Industrial electric machines and shaft systems are vital components that typically need to be operated continuously without interruptions. To maximize the service life of an electric machine/motor, it is necessary to detect and correct non-ideal operation conditions before they lead to mechanical failures. Such non-ideal operation conditions include machine vibrations, which deteriorate the motor, shorten its service life, and may eventually lead to, e.g., bearing failure. Mechanical unbalance, present on nearly all rotating machines, has been found to be one of the most common causes of machine vibrations.

Balancing the electric motor is a time-consuming and laborious task. For example, on-site balancing of the electric motor usually requires uncertain estimations and multiple tests runs with a trial weight. It may be necessary to ship the electric motor to a workshop for balancing, leading to considerable downtime of the electric machine. Therefore, in practice, considerable imbalances may be tolerated before the motor is balanced, which may lead to excess wear on the machinery and shortened service life of the electric motor.

In view of the above, there is a need for improved methods and means for on-site balancing of electric machines.

### SUMMARY

A primary objective of embodiments herein is to provide in at least some aspects improved methods and means for balancing of electric machines. A specific objective is to provide means and methods for determining a balancing action to balance an electrical machine. In particular, it is an object to provide means and suitable methods for on-site balancing of electric machines.

According to a first aspect, at least the primary objective is accomplished by a computer-implemented method for determining a balancing action to balance an electric machine in an installed state, the electric machine comprising a stator, a rotor, a shaft fixed to the rotor, and at least one bearing supporting the shaft, such as at least one rolling element bearing. The method is performed by a control unit communicatively connected to a displacement sensor. It comprises:

- collecting measurement data from the displacement sensor during rotation of the shaft in the installed state of the electric machine, the measurement data relating to measured displacements of the shaft in at least one detection plane normal to a longitudinal axis of the shaft,
- estimating an unbalance force based on the collected measurement data by predicting at least one displacement of the shaft in the at least one detection plane as a function of at least one potential unbalance force using a dynamic model of the electric machine, and comparing the measured displacements to the predicted at least one displacement,
- determining the balancing action based on the estimated unbalance force.

By using the displacement sensor in combination with the dynamic model of the electric machine, it is possible to estimate the unbalance force acting on components of the electric motor, such as causing radial load on bearings of the electric machine, in a relatively quick and efficient manner. The method may be performed on-site, when the electric machine is installed, hence reducing the need to send it to a workshop. Total uptime and service life of the electric machine may hence be increased. The method may be used for assisting a maintenance engineer to select an appropriate balancing action, such as to select a balancing weight and its installation location on the electric machine.

Optionally, the predicting of the at least one displacement of the shaft comprises predicting a set of orbits, wherein each predicted orbit describes displacement of the shaft in the at least one detection plane for a specific rotor and/or shaft unbalance.

A quick and accurate estimation of the unbalance force may thereby be achieved.

Optionally, the dynamic model of the electric machine models the rotor as a flexibly supported rigid body. This has been found to be sufficient for rotational speeds below a critical speed of the electric machine. The dynamic model may, e.g., model the electric machine as a modified Jeffcott rotor, with shaft and bearings modelled as a series spring connection. For more flexible rotors, operating above the first critical speed, the dynamic model of the electric machine may model the rotor based on finite element method (FEM) calculations.

Optionally, the method further comprises:

- determining a rotational speed of the electric machine,

wherein the estimating of the unbalance force further comprises inputting the rotational speed to the dynamic model, and wherein the dynamic model predicts the at least one displacement as a function of the rotational speed.

Optionally, the balancing action comprises adjusting a mass distribution of the rotor and/or a mass distribution of the shaft. This may, e.g., be accomplished by adding a weight to or by removing material from the rotor and/or the shaft to compensate for any detected unbalance.

Optionally, the determining of the balancing action comprises using the dynamic model to select the balancing action that will minimize an amplitude of the shaft displacement. An efficient determination of the balancing action may thereby be achieved.

Optionally, the determining of the balancing action comprises determining at least one correction plane along the shaft in which at least one correction mass is to be added or removed. The dynamic model of the electric machine may provide information about the orbits, i.e., trajectories, of the shaft in different planes, including the correction plane(s). Thus, there is a clear relationship between forces acting in one plane and shaft displacements occurring in another one. Several correction planes may be selected. In this way, the mass distribution of the shaft may quickly be adjusted to achieve a more balanced electric machine.

Optionally, the determining of the at least one correction plane comprises determining a number of correction planes along the shaft. It may hence be determined how many correction planes are necessary to achieve a proper balancing.

Optionally, the determining of the balancing action further comprises determining at least one angular position within the at least one correction plane in which the at least one correction mass is to be added or removed. An improved balancing may thereby be achieved.

Optionally, the measurement data collected by the displacement sensor would relate to displacements of the shaft along at least two directions within the at least one detection plane, such as two normal directions within the at least one detection plane. This may lead to a precise estimation of the unbalance force.

Optionally, the dynamic model further uses a known bearing stiffness and a known shaft stiffness to predict the at least one displacement of the shaft. An accurate prediction of the at least one displacement may thereby be achieved using a relatively simple dynamic model of the electric machine, wherein the bearings and the shaft may be modelled as springs based on the known bearing stiffness and shaft stiffness.

Optionally, the collecting of measurement data is carried out during rotation of the shaft at a sub-critical rotational speed, such as at a rotational speed of 4000 rpm or less, or 3000 rpm or less, or 2000 rpm or less, or 1500 rpm or less, depending on design of the electric machine. The critical speed of the electric machine, or first resonating frequency, is a design property and the operating speeds relate to it. For sub-critical rotational speeds, a simpler dynamic model may typically be used, reducing the complexity of the estimation of the unbalance force. The rotational speed may be measured or estimated.

According to a second aspect, an electronic control unit comprising processing circuitry configured to perform the method of the first aspect is provided.

According to a third aspect, an electric machine assembly is provided. It comprises a stator, a rotor, a shaft fixed to the rotor, at least one bearing supporting the shaft, such as a rolling element bearing, a displacement sensor arranged to measure displacements of the shaft in at least one detection plane normal to a longitudinal axis of the shaft, and the control unit according to the second aspect.

The electric machine may be a motor or a generator, or a combined motor/generator.

The shaft may comprise an electrically conducting part and the displacement sensor may be arranged around the electrically conducting part. The entire shaft may be of the same material.

Optionally, the displacement sensor is a capacitive displacement sensor comprising a plurality of capacitive sensing elements arranged around a circumference of the shaft, i.e., around the electrically conducting part of the shaft. Such a sensor may have a printed circuit board comprising a mounting hole through which the shaft of the electric machine extends. It may enable high-resolution measurements of the position and motion of the shaft at a low cost. Furthermore, the capacitive displacement sensor is insensitive to ultrasonic noise, humidity, etc. By using large sensing areas, surface roughness may be averaged out.

According to a fourth aspect, a computer program comprising computer code which, when run on processing circuitry of a control unit, causes the control unit to perform the method of the first aspect, is provided.

According to a fifth aspect, a computer program product comprising a computer program of the fourth aspect, and a computer readable storage medium on which the computer program is stored, is provided.

Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, module, action, etc." are to be interpreted openly as referring to at least one instance of the element, apparatus, component, means, module, action, etc., unless explicitly stated otherwise. The actions of any method disclosed herein do not have to be performed in the exact order disclosed, unless explicitly stated.

**BRIEF DESCRIPTION OF THE DRAWINGS**

The inventive concept is now described, by way of example, with reference to the accompanying drawings, in which:

Fig. 1 is a schematic diagram illustrating an electric machine according to embodiments;

Figs. 2 is a flowchart illustrating methods according to embodiments;

Fig. 3 is a schematic illustration of a model of the electric machine used according to embodiments;

Fig. 4 is a diagram comparing experimental data to orbits modelled using a dynamic model,

Fig. 5 is a schematic diagram showing functional units of a control unit according to an embodiment;

Fig. 6 is a schematic diagram showing functional modules of a control unit according to an embodiment; and

Fig. 7 shows one example of a computer program product comprising computer readable means according to an embodiment.

The drawings are schematic and not drawn to scale.

## DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

Briefly, the present teachings suggest determining a balancing action to balance an electric machine in an installed state by collecting measurement data relating to shaft displacement during rotation, estimating an unbalance force based on the measurement data, and determining a balancing action based on the estimated unbalance force. In the estimation of the unbalance force, the present teachings suggest using a dynamic model of the electric machine, which model is used to predict displacement, such as orbits, of the shaft as a function of potential unbalance forces. Hence, the actual movement of the shaft during rotation of the electric machine is compared to predicted shaft movement as a function of unbalance force. The balancing action may hence be selected to mitigate the estimated unbalance force.

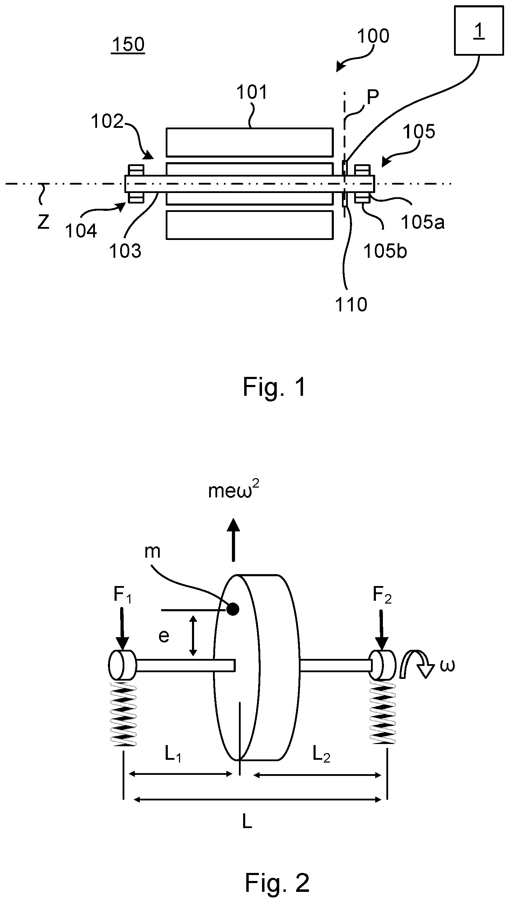

**Fig. 1** schematically illustrates an electric machine assembly 150 comprising a rotating electric machine 100, such as a motor and/or a generator. The electric machine 100 is shown in a longitudinal section in Fig. 1.

The electric machine 100 comprises a stator 101 and a rotor 102. The stator 101 and the rotor 102 are configured to electromagnetically interact with each other. A shaft 103 extending along a longitudinal axis Z is fixed to the rotor 102. The shaft 103 and the rotor 102 are configured to rotate about the longitudinal axis Z relative to the stator 101. Bearings 104, 105, such as rolling element bearings, are arranged for supporting the shaft against a fixed component (not shown), such as a housing of the electric machine 100, and enable rotation of the shaft 103 relative to the fixed component. The bearing 105 comprises an inner bearing race 105a attached to the shaft 103 and an outer bearing race 105b attached to the fixed component. The bearing 104 is similar or identical to the bearing 105.

The electric machine assembly 150 comprises at least one shaft displacement sensor 110 arranged to measure displacements of the shaft 103 in a detection plane P normal to the longitudinal axis Z. The shaft displacement sensor 110 is arranged around the shaft 103. The shaft displacement sensor 110 may for example be installed adjacent to the bearing 105. The shaft displacement sensor 110 may have a through-opening and the shaft 103 may extend through the through-opening. The shaft displacement sensor 110 may be a capacitive sensor. The shaft displacement sensor 110 may for example be of the type disclosed in EP2918964 A1.

The shaft displacement sensor 110 may be configured to detect shaft displacement along an X-axis and a Y-axis, wherein the X- and Y-axes are axes extending within the detection plane P perpendicular to each other. The shaft displacement signal may comprise both X-axis displacement measurements and Y-axis displacement measurements of the shaft 103.

The electric machine assembly 150 further comprises an electronic control unit 1 communicatively connected to the shaft displacement sensor 110. The control unit 1 may be configured to receive the shaft displacement signal from the shaft displacement sensor 110 by wireless communication, by wired communication, or by a combination of both.

**Fig. 2** illustrates a dynamic model of the electric machine 100 that may be used to predict displacements, such as orbits, of the shaft 103 in the detection plane P at rotational speeds $\omega$ below the critical speed of the electric machine 100. The dynamic model is in the illustrated example a modified Jeffcott model in which the rotor is modelled as a flexibly supported mass with the shaft 103 and the bearings 104, 105, located at axial distances $L_1$, $L_2$ from the rotor, respectively, modelled as a series spring connection. When the mass has a mass centre m offset from the rotational axis by a radial distance e, a sinusoidal resulting force having the amplitude $F_R = m\,e\,\omega^2$, with counteracting forces $F_1$, $F_2$ acting on the bearings 104, 105, respectively, will arise. Bearing reactions may be derived by multiplying the bearing stiffness by the shaft displacement in the bearings 104, 105 instead of by the displacement of the rotating mass. The shaft deflec-

tion $D_x$ along the X-axis within the detection plane P may hence be described as

$$D_x = F_{2,x} \left( \frac{1}{k_1} + \frac{1}{k_2} \right)$$

wherein $F_{2,x}$ is the unbalance force acting on the bearing 105 in the x-direction, ki is the bearing stiffness, and $k_2$ is the shaft stiffness. The same equation may be used for deflections in the y-direction.

The simple model illustrated in Fig. 2 has been found sufficient to predict orbits of the shaft for rigid rotors operating at rotational speeds below the first critical speed. However, for more flexible rotors and/or shafts, operating at speeds above the first critical speed, a more advanced dynamic model, such as based on FEM calculations, may be used.

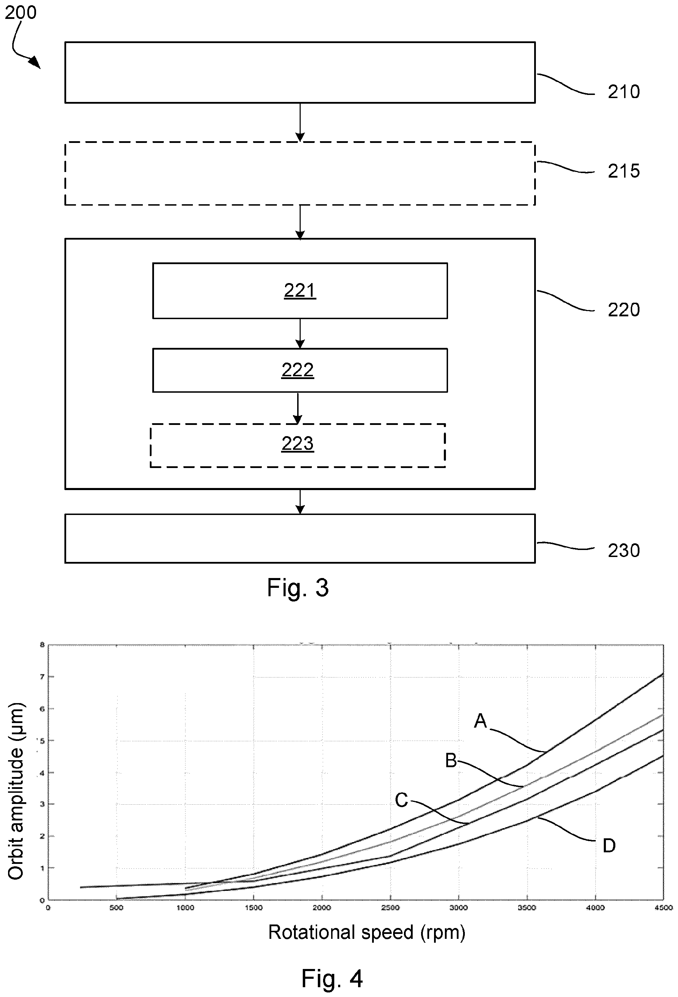

A method 200 of determining a balancing action to balance the electric machine 100 in its installed state will now be described with reference to Fig. **3.** The method is carried out in the control unit 1.

In a first action 210, measurement data are collected from the displacement sensor 110 during rotation of the shaft 103 in the installed state of the electric machine 100. The measurement data relates to measured displacements of the shaft 103 in the detection plane P, such as measured displacements along the X-axis and the Y-axis. The measurement data may preferably be collected when the rotor 102 and the shaft 103 rotate at a sub-critical rotational speed, such as at a rotational speed of 4000 rpm or less, or 3000 rpm or less, or 2000 rpm or less, or 1500 rpm or less, depending on the configuration of the electric machine, enabling the use of the simplified dynamic model as described above.

In a second action 220, an unbalance force is estimated based on the collected measurement data. This is performed by the action 221 of predicting at least one displacement of the shaft 103 in the at least one detection plane P as a function of at least one potential unbalance force, using the dynamic model of the electric machine 100, and by the action 222 of comparing the measured displacements to the predicted at least one displacement. The dynamic model may predict orbits of the shaft 103 in the detection plane P as a function of at least one potential unbalance force. The orbits may be described in terms of shaft displacements in at least one direction, such as in a radial direction, e.g. in the x- and y-directions. The dynamic model used to estimate the unbalance force may, for rotational speeds below the critical speed of the electric machine 100, be the relatively simple dynamic model described above. Hence, for the given rotational speed below the critical speed, a matrix may be defined that relates potential unbalance forces to shaft displacement(s) in the detection plane.

The predicting of the at least one displacement of the shaft 103 in the action 221 may comprise predicting a set of orbits, wherein each predicted orbit describes displacement of the shaft 103 in the at least one detection plane P for a specific rotor and/or shaft unbalance.

In a third action 230, the balancing action is determined based on the estimated unbalance force. For example, a balancing action that will counteract the unbalance force, and hence minimize a resulting unbalance force, may be selected. The dynamic model may be used to select the balancing action that will minimize an amplitude of the shaft displacement, thereby minimizing the unbalance force. The balancing action may typically comprise adjustment of a mass distribution of the rotor 102 and/or a mass distribution of the shaft 103, such as by determining at least one correction plane along the shaft 103 in which at least one correction mass is to be added or removed. A number of correction planes may be determined. Depending on the type of rotor, the number of correction planes may vary. For example, for a flexibly supported rigid rotor, e.g., in a fan, a single correction plane may be sufficient, although for most applications, two correction planes may be necessary for relatively rigid rotors. Three or more correction planes may be necessary for a relatively flexible rotor. The minimum number of correction planes is determined by the rotor flexibility, but it is possible to select a larger number of corrections planes to achieve a more accurate and/or a more convenient balancing mass distribution.

Furthermore, at least one angular position within the at least one correction plane in which the at least one correction mass is to be added or removed may be determined. The at least one angular position may be determined by calculations using the dynamic model.

The method may also comprise an action 215 of determining a rotational speed $\omega$ of the electric machine 100. The action 220 of estimating the unbalance force may further comprise an action 223 of inputting the determined rotational speed $\omega$ to the dynamic model. The dynamic model may thereby predict the displacement(s), such as the orbits, of the shaft 103 as a function of the rotational speed $\omega$.

Experimentally generated shaft orbits were compared to modelled orbits, using the dynamic model described above, and the results of the comparison are shown in Fig. **4.** The experimental data were generated by using an electric motor 100 with unbalance forces caused by introducing one or more unbalance weights at a radial distance of 65 mm from the longitudinal axis of the electric machine 100. The method was tested for a series of rotational speeds ranging from 500 rpm to 4500 rpm. The unbalance weights were introduced at a drive end and at a non-drive end of the rotor 102. For a bearing stiffness of 90 N/μm and a shaft stiffness of about 81 N/μm, a good agreement between experimental orbit amplitudes and modelled orbit amplitudes was achieved over the entire rotational speed range as illustrated in Fig. 4. Curve A is the modelled amplitude for the drive end, curve B is the modelled amplitude for the non-drive end, curve C is the experimentally determined amplitude for the non-drive end, and curve D is the dynamic stiffness characteristic of the shaft.

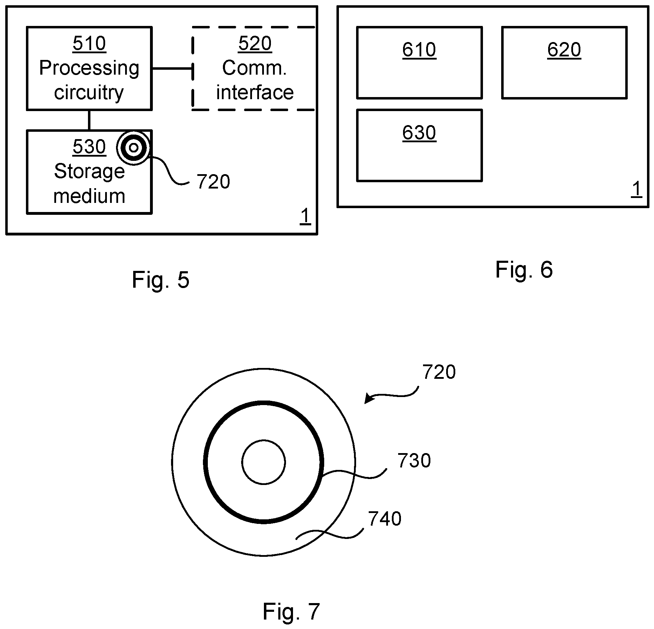

**Fig. 5** schematically illustrates, in terms of a number of functional units, the components of a control unit 1 according to an embodiment. Processing circuitry 510 is provided using any combination of one or more of a suitable central processing unit (CPU), multiprocessor, microcontroller, digital signal processor (DSP), etc., capable of executing software instructions stored in a computer program product 720 (as in Fig. 7), e.g., in the form of a storage medium 530. The processing circuitry 510 may further be provided as at least one application specific integrated circuit (ASIC), or field programmable gate array (FPGA).

Particularly, the processing circuitry 510 is configured to cause the control unit 1 to perform a set of operations, or actions, as disclosed above. For example, the storage medium 530 may store the set of operations, and the processing circuitry 510 may be configured to retrieve the set of operations from the storage medium 530 to cause the control unit 1 to perform the set of operations. The set of operations may be provided as a set of executable instructions. The processing circuitry 510 is thereby arranged to execute methods as herein disclosed.

The storage medium 530 may also comprise persistent storage, which, for example, can be any single one or combination of magnetic memory, optical memory, solid state memory or even remotely mounted memory.

The control unit 1 may further comprise a communications interface 520 for communications with other entities, functions, nodes, and devices, over suitable interfaces. As such, the communications interface 520 may comprise one or more transmitters and receivers, comprising analogue and digital components.

The processing circuitry 510 controls the general operation of the control unit 1 e.g., by sending data and control signals to the communications interface 520 and the storage medium 530, by receiving data and reports from the communications interface 520, and by retrieving data and instructions from the storage medium 530.

Other components, as well as the related functionality, of the control unit 1 are omitted in order not to obscure the concepts presented herein.

**Fig. 6** schematically illustrates, in terms of a number of functional modules, the components of a control unit 1 according to an embodiment. The control unit 1 of Fig. 6 comprises a number of functional modules: a collection module 610 configured to collect measurement data from the displacement sensor 110 during rotation of the shaft 103, the measurement data relating to measured displacements of the shaft 103 in the at least one detection plane P, an estimation module 620 configured to estimate an unbalance force based on the collected measurement data by predicting at least one displacement of the shaft 103 in the at least one detection plane P as a function of at least one potential unbalance force using a dynamic model of the electric machine, and comparing the measured displacements to the predicted at least one displacement, and a determination module 630 configured to determine the balancing action based on the estimated unbalance force. The control unit 1 may further comprise a number of optional modules (not shown) configured to perform the actions described above with reference to Fig. 3. In general terms, each functional module 610-630 may be implemented in hardware or in software. Preferably, one or more or all functional modules 610-630 may be implemented by the processing circuitry 510, possibly in cooperation with the communications interface 520 and the storage medium 530. The processing circuitry 510 may thus be arranged to from the storage medium 530 fetch instructions as provided by a functional module 610-630 and to execute these instructions, thereby performing any actions of the control unit 1 as disclosed herein.

**Fig. 7** shows one example of a computer program product 720 comprising computer readable means 740. On this computer readable means 740, a computer program 730 can be stored, which computer program 730 can cause the processing circuitry 510 and thereto operatively coupled entities and devices, such as the communications interface 520 and the storage medium 530, to execute methods according to embodiments described herein. The computer program 730 and/or computer program product 720 may thus provide means for performing any actions of the control unit 1 as herein disclosed.

In the example of Fig. 7, the computer program product 720 is illustrated as an optical disc, such as a CD (compact disc) or a DVD (digital versatile disc) or a Blu-Ray disc. The computer program product 1200 could also be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory. Thus, while the computer program 730 is here schematically shown as a track on the depicted optical disk, the computer program 730 can be stored in any way which is suitable for the computer program product 720.

The inventive concept has mainly been described above with reference to a few embodiments. However, as is readily appreciated by a person skilled in the art, other embodiments than the ones disclosed above are equally possible within the scope of the inventive concept, as defined by the appended patent claims.

**Claims**

1. A computer-implemented method (200) for determining a balancing action to balance an electric machine (100) in an installed state, the electric machine comprising a stator (101), a rotor (102), a shaft (103) fixed to the rotor, and at least one bearing (104, 105) supporting the shaft, such as at least one rolling element bearing,
the method (200) being performed by a control unit (1) communicatively connected to a displacement sensor (110), the method comprising:

- collecting (210) measurement data from the displacement sensor (110) during rotation of the shaft (103) in the installed state of the electric machine (100), the measurement data relating to measured displacements of the shaft in at least one detection plane normal to a longitudinal axis (Z) of the shaft,
- estimating (220) an unbalance force based on the collected measurement data by predicting (221) at least one displacement of the shaft in the at least one detection plane as a function of at least one potential unbalance force using a dynamic model of the electric machine, and comparing (222) the measured displacements to the predicted at least one displacement,
- determining (230) the balancing action based on the estimated unbalance force.

2. The method of claim 1, wherein the predicting (221) of the at least one displacement of the shaft comprises predicting a set of orbits, wherein each predicted orbit describes displacement of the shaft in the at least one detection plane for a specific rotor and/or shaft unbalance.

3. The method of any one of the preceding claims, wherein the dynamic model of the electric machine models the rotor as a flexibly supported rigid body.

4. The method of any one of the preceding claims, further comprising:

- determining (215) a rotational speed ($\omega$) of the electric machine (100),

wherein the estimating (220) of the unbalance force further comprises inputting (223) the rotational speed ($\omega$) to the dynamic model, and wherein the dynamic model predicts the at least one displacement as a function of the rotational speed ($\omega$).

5. The method of any one of the preceding claims, wherein the balancing action comprises adjusting a mass distribution of the rotor (102) and/or a mass distribution of the shaft (103).

6. The method of any one of the preceding claims, wherein the determining (230) of the balancing action comprises using the dynamic model to select the balancing action that will minimize an amplitude of the shaft displacement.

7. The method of any one of the preceding claims, wherein the determining (230) of the balancing action comprises determining at least one correction plane along the shaft (103) in which at least one correction mass is to be added or removed, preferably wherein the determining of the at least one correction plane comprises determining a number of correction planes along the shaft (103).

8. The method of any one of the preceding claims, wherein the measurement data collected by the displacement sensor (110) relate to displacements of the shaft (103) along at least two directions within the at least one detection plane (P), such as two normal directions within the at least one detection plane (P).

9. The method of any one of the preceding claims, wherein the dynamic model further uses a known bearing stiffness and a known shaft stiffness to predict the at least one displacement of the shaft (103).

10. The method of any one of the preceding claims, wherein the collecting (210) of measurement data is carried out during rotation of the shaft (103) at a sub-critical rotational speed, such as at a rotational speed of 4000 rpm or less, or 3000 rpm or less, or 2000 rpm or less, or 1500 rpm or less.

11. An electronic control unit (1) comprising processing circuitry (310) configured to perform the method of any one of claims 1-10.

12. An electric machine assembly (150) comprising a stator (101), a rotor (102), a shaft (103) fixed to the rotor, at least one bearing (104, 105) supporting the shaft, such as a rolling element bearing, a displacement sensor (110) arranged to measure displacements of the shaft in at least one detection plane (P) normal to a longitudinal axis (Z) of the shaft, and the control unit (1) of claim 11.

13. The electric machine assembly according to claim 12, wherein the displacement sensor (110) is a capacitive displacement sensor comprising a plurality of capacitive sensing elements arranged around a circumference of the shaft (103).

14. A computer program (730) comprising computer code which, when run on processing circuitry (510) of a control unit (1), causes the control unit (1) to perform the method of any one of claims 1-10.

15. A computer program product (720) comprising a computer program of claim 14, and a computer readable storage medium (740) on which the computer program (730) is stored.

Fig. 1

Fig. 2

200

Fig. 3

Rotational speed (rpm)

Fig. 4

| | | |
|---|---|---|
| <u>510</u><br>Processing<br>circuitry | | <u>520</u><br>Comm.<br>interface |
| <u>530</u><br>Storage<br>medium | | |

720

1

**Fig. 5**

| | |
|---|---|
| <u>610</u> | <u>620</u> |
| <u>630</u> | |

1

**Fig. 6**

720

730

740

**Fig. 7**

## EUROPEAN SEARCH REPORT

**Application Number**

EP 24 19 7451

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 092 398 A1 (ABB SCHWEIZ AG [CH]) 23 November 2022 (2022-11-23) | 1,2,4-15 | INV. G01M1/16 |
| Y | * the whole document * | 3 | G01M1/22 G01M1/28 |
| X | EP 3 388 809 A1 (SIEMENS AG [DE]) 17 October 2018 (2018-10-17) * the whole document * | 1,11,14, 15 | G01M1/32 G01M1/34 G01M1/36 H02K15/165 |
| Y | ALSALEH ALI ET AL: "Experimental and theoretical investigations of the lateral vibrations of an unbalanced Jeffcott rotor", FRONTIERS OF STRUCTURAL AND CIVIL ENGINEERING, HIGHER EDUCATION PRESS, HEIDELBERG, vol. 14, no. 4, 29 July 2020 (2020-07-29), pages 1024-1032, XP037234128, ISSN: 2095-2430, DOI: 10.1007/S11709-020-0647-Y [retrieved on 2020-07-29] | 3 | |
| A | * Abstract, Sections 2-3, 5 * | 1,2,4-15 | **TECHNICAL FIELDS SEARCHED (IPC)** G01M H02K |

The present search report has been drawn up for all claims

| Place of search | Date of completion of the search | Examiner |
|---|---|---|
| The Hague | 17 January 2025 | Foster, Keir |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 703 698 A1**

## ANNEX TO THE EUROPEAN SEARCH REPORT
## ON EUROPEAN PATENT APPLICATION NO.

EP 24 19 7451

17-01-2025

| Patent document cited in search report | | Publication date | Patent family member(s) | | Publication date |
|---|---|---|---|---|---|
| EP 4092398 | A1 | 23-11-2022 | NONE | | |
| EP 3388809 | A1 | 17-10-2018 | EP | 3388809 A1 | 17-10-2018 |
| | | | WO | 2018188840 A1 | 18-10-2018 |

EPO FORM P0459

For more details about this annex : see Official Journal of the European Patent Office, No. 12/82

**REFERENCES CITED IN THE DESCRIPTION**

**Patent documents cited in the description**

- EP 2918964 A1